# EUROPEAN PATENT APPLICATION

(11) **EP 4 527 873 A1**
(43) Date of publication of application: **26.03.2025**
(21) Application number: 23382959.7
(22) Date of filing: 22.09.2023
(51) Int. Cl.: C08G 65/40, C08J 5/04

(54) **RESIN, MANUFACTURING METHOD FOR COMPOSITE MATERIAL FROM SAID RESIN AND COMPOSITE MATERIAL OBTAINED FROM SAID MANUFACTURING METHOD**

(71) Applicant: Ideko, S.Coop., 20870 Elgoibar Guipuzcoa (ES); Universidad del Pais Vasco, 48940 Leioa, Bizkaia (ES)
(72) Inventor: VALLEJO RASERO, Francisco Javier, 20870 Elgoibar (Gipuzkoa) (ES); URRUTXUA ANDIA, Maitane, 20870 Elgoibar (Gipuzkoa) (ES); ZELAIETA GARATE, Oier, 20870 Elgoibar (Gipuzkoa) (ES); MORENO BENITEZ, Maria Isabel, 48940 Leioa (Bizkaia) (ES); VILAS VILELA, Jose Luis, 48940 Leioa (Bizkaia) (ES)
(74) Representative: Plasseraud IP

(57) **Abstract**

The invention relates to a resin for a composite material, a manufacturing method for a composite material from said resin, and a composite material manufactured from said manufacturing method, wherein the resin comprises at least one prepolymer reagent of a polyether ether ketone (PEEK) type of composition that comprises at least one aliphatic chain.

## Description

### Sector of the art

The present invention is related to the composite materials industry and more specifically to a composite material, the matrix of which is a thermoplastic polymer for in situ polymerisation in the manufacturing process of structural parts.

### Prior Art

Nowadays, the use of Polyether ether ketone (PEEK), a semi-crystalline thermoplastic polymer which, due to the properties thereof (thermal stability, good mechanical properties and chemical resistance), is used for difficult applications in terms of temperature and/or mechanical and chemical stresses, is widely known.

PEEKs are of special interest in the aeronautical and space fields, as well as in the automotive rail, marine, wind power, sport, construction, and electronics sectors, and even for medical implants.

One of the methods for making PEEK is, firstly, preparing a resin that comprises a prepolymer reagent of the formula: 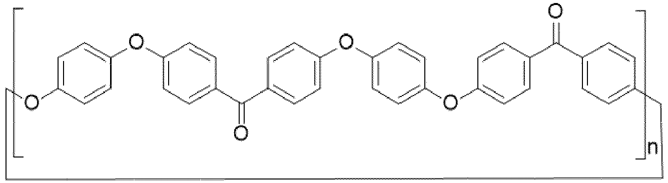 through the reaction of an aromatic dihalide, specifically difluoro ketone with the formula: 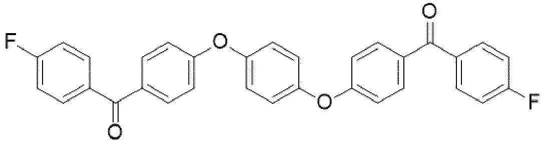 and hydroquinone, formula:

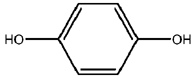

In polymer chemistry, the term prepolymer refers to a monomer or system of monomers that have reacted to a state of intermediate molecular mass. This material is capable of a greater polymerisation through reactive groups, up to a high state of molecular mass in which it is completely cured.

In an example of the preparation of said resin, firstly, in a round flask, potassium carbonate (K₂CO₃) (15 mol), toluene (15 ml) and N,N-dimethylformamide (DMF) are mixed. Toluene is added to remove the water that forms during the reaction, potassium carbonate (K₂CO₃) is used as a base for the deprotonation of hydroquinone and DMF is used as a high-boiling polar solvent.

Once all reagents have been added, the openings of the flask are closed, the solution is stirred at room temperature and N₂ gas is introduced to create an inert atmosphere in order to increase the reaction yield. After 15 minutes at room temperature and with an inert atmosphere, the temperature is raised to 155 °C. Meanwhile, on one hand, the solution of hydroquinone (1 mol) with DMF is prepared and, on the other hand, the solution of difluoro ketone (1 mol) with DMF is prepared and both solutions are added drop by drop to the spherical flask being heated. When the hydroquinone and the difluoro ketone are added, the N₂ gas is removed and the mixture is stirred for 48 hours.

In another example of the preparation of said resin, firstly, potassium carbonate (K₂CO₃) (15 mol), toluene (15 ml), DMF and difluoro ketone (1 mol) are placed in a round-bottom flask.

N₂ gas is then allowed to pass through for 15 minutes and the temperature is raised to 155 °C. Meanwhile, the solution of hydroquinone (1 mol) in DMF is prepared. Once the solution has reached 155°C, the hydroquinone is added little by little. Then, the mixture is stirred at that temperature for 48 hours.

In both examples of the preparation of said molecule, the following steps are carried out to purify the crude:
- Firstly, the solution is filtered, and the filtered part is saved.
- Secondly, The filtrate is extracted with chloroform and the organic phase is washed with water to remove the substrates.
- The organic phase is then concentrated in a rotary evaporator to eliminate chloroform and DMF.
- Lastly, The solid obtained is dried in an oven at 190°C for 3 days.

A known method for the polymerisation of said molecules (PEEK) is to use cesium fluoride (CsF) as an initiator. To do so, said molecules in a molten state and the CsF initiator (0.5 to 4% by weight) are added to a round-bottom flask in an inert atmosphere at a temperature between 200 and 450°C and left to polymerise for 1 to 72 hours.

Normally, products for aeronautical applications made with this polymer (PEEK) are usually based on a thermoplastic prepreg in the manufacturing process. In these types of methods, the polymer is already polymerised and in order to process it, the polymer must be in a molten state. Specifically, in order to process PEEK, a temperature greater than 380°C is necessary.

Likewise, Products made with PEEK are usually manufactured by thermoforming processing, continuous compression moulding, pultrusion, laser-assisted AFP and ATL, hybrid methods, additive manufacturing or injection moulding.

### Thermoforming processing

The thermoforming method is a rapid manufacturing method used to form a 2D panel into a 3D shape. In general, it requires the use of a semi-manufactured product. To optimise the method, the thermoforming step is fed with a pre-consolidated laminate. The pre-consolidated laminate is manufactured using thermoplastic composite material from a roll. The material is cut into a certain number of layers and the stacking sequence is done by keeping them joined with a soldering iron at the edge of the preform.

As an example, PEEK autoclave consolidation requires a curing cycle with a holding phase at 380°C for 20-30 min and a pressure of 7-10 bar, depending on the final application of the piece.

### Continuous compression moulding

Continuous compression moulding (CCM) is a manufacturing technique that is based on the use of a press with a temperature that decreases from one side to the other; the part to be manufactured can move along the press plates with an alternating opening/closing cycle, moving the part forward during opening. This method makes it possible to obtain a progressive cooling of the piece thanks to the movement thereof in the direction of the low temperature areas.

### Pultrusion

Thermoplastic pultrusion is a method in which, for the production of composite profiles based on thermoplastics, prepregs are preheated in the oven to the required temperature, melted and consolidated in the mould, and then cooled.

### Laser-assisted AFP and ATL.

AFP/ATL methods used to process thermoplastic materials generally involve the installation of a diode laser in the end-effector, which is commonly used in the case of thermoset prepregs (due to the need to reach higher temperatures to melt the polymer and allow adhesion between layers). Furthermore, for the lamination of thermoplastic composites, an infrared camera is used to monitor the temperature at the cutting point, which is at the interface between the roller and the mould surface.

Currently, the main problem in manufacturing composite materials for the aeronautical industry by AFP/ATL methods is that it requires consolidation in an autoclave at high temperatures with high energy costs and the use of very expensive materials.

### Hybrid methods

An example of a hybrid method involves making a sandwich with a prepreg carbon PEEK matrix between two amorphous films, and subsequently consolidating them in a method that provides complete consolidation and a controlled cooling rate to obtain the correct crystallinity of the PEEK. A good integration of the two materials mentioned above is achieved by means of a transition zone with different percentages of the two materials, ranging progressively from 100 to 0% to 0 to 100%, which is possible due to the ability of the two materials to make mixtures.

### Additive manufacturing

Additive manufacturing or 3D printing involves producing complex shapes by adding molten layers. the thermoplastic material layers can be produced by both amorphous and semi-crystalline resins; in the case of PEEK (semi-crystalline), the problem of the cooling rate and its effect on the final crystallinity must be considered.

### Injection moulding

Injection moulding is a technique based on the insertion of a continuous fibre composite part into an injection moulding cavity and subsequently injecting the short fibre reinforced polymer into the mould. This technique is called "overmoulding" and allows for the manufacturing of complex shapes to be combined with the partial use of continuous fibres.

Therefore, PEEK has the disadvantage in that it is difficult to process due to the high melting temperature (Tₘ > 340 °C), which in turn leads to high energy costs.

Likewise, the most commonly used methods for manufacturing composite materials from PEEK, previously mentioned, are complex and slow methods, which also makes the manufacturing of composite materials for the aeronautical industry more expensive.

Furthermore, composite materials manufactured by the methods and/or from PEEK have the disadvantage in that the final pieces usually have porosity problems, which makes them not very efficient for the aeronautical industry (as well as the naval, etc.).

Therefore, a resin is necessary for a composite material with final properties similar to PEEK that allow for in situ polymerisation in a manufacturing method for composite materials at moderate temperatures, which in turn leads to a reduction in manufacturing costs, with respect to what is known in the state of the art.

### Object of the invention

For the purpose of fulfilling this objective and solving the technical problems discussed up until now, in addition to providing additional advantages that may later result, the present invention provides a resin for a composite material, wherein said resin comprises at least one prepolymer reagent of a polyether ether ketone (PEEK) type composition that comprises at least one aliphatic chain.

It has been found that the presence of an aliphatic chain in the prepolymer reagent surprisingly causes the resin to have a lower melting temperature than PEEK but similar physical properties, which in turn allows said resin to polymerise in situ in a composite material manufacturing method at moderate temperatures (between 120 and 200 °C). This, in turn, leads to a reduction in manufacturing costs of said composite materials.

In one embodiment of the invention, the prepolymer reagent has the formula (I): 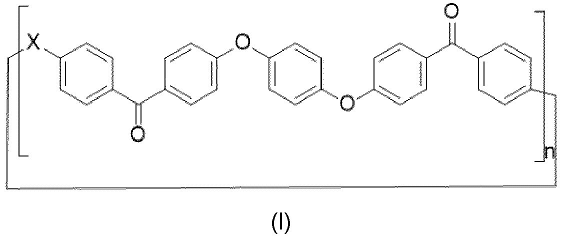 where X comprises at least one aliphatic chain.

In another embodiment of the invention, the prepolymer reagent has the formula (II): 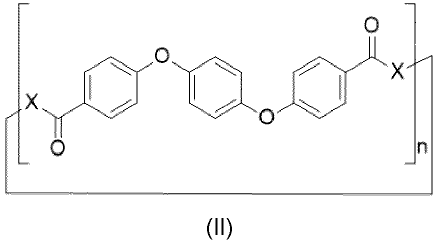 where X comprises at least one aliphatic chain.

Preferably, The aliphatic chain comprises between 1 and 12 carbons.

The number of carbons in the aliphatic chain determines the melting temperature of the resin, and thus depending on the temperature required for the manufacturing method for composite materials, a resin with an aliphatic chain with a different number of carbons will be used.

Likewise, an aliphatic chain in which the number of carbons is greater than 12 could imply a decrease in the final properties of the composite material manufactured from the present resin.

According to another aspect of the invention, it is a manufacturing method for a composite material, comprising the steps of:
1) mixing the aforementioned resin in an inert atmosphere and in a molten state, and a first initiator,
2) impregnating a fibrous substrate with said mixture in a molten state in a mould,
3) allowing the mixture to polymerise.

Thus, through this manufacturing method, a piece of composite material is obtained using the aforementioned resin so that it is polymerised in situ, given the low melting temperature thereof, obtaining a piece with similar final properties to PEEK.

Thanks to the in situ polymerisation of the polymer, a greater wettability of the resin in the fibrous substrate is achieved, and the piece itself has a lower porosity than if it had been manufactured from PEEK and according to one of the methods described in the state of the art.

Preferably, wherein the manufacturing method is carried out at a temperature between 120 °C and 200 °C, which in turn leads to lower manufacturing costs.

Preferably, the first initiator for the manufacturing method is selected from a list comprising CsF, Titanium butoxide (TiBut), Antimony oxide (Sb₂O₃) or a phenoxide, thereby achieving a higher yield of the reaction.

Preferably, the first initiator would be CsF, since it has been proven that a higher yield of the reaction is obtained.

Preferably, the duration of the polymerisation of step 3 has a value from 1 to 72 h, thereby achieving a faster manufacturing method for pieces than the methods described in the state of the art.

Lastly, another object of the invention is a composite material, manufactured through the previously mentioned manufacturing method.

### Detailed description of the invention

As mentioned above, the present invention consists of a resin used for manufacturing a composite material, which can be prepared by reacting an aromatic dihalide (such as difluoro ketone) or an aromatic-aliphatic dihalide with an aromatic-aliphatic dialcohol.

By way of example, aromatic-aliphatic dialcohol can be
Bis(4-hydroxyphenyl)methane, formula:

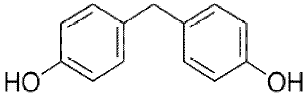

Given that several methodologies known in the state of the art for the preparation of an aromatic dihalide (difluoro ketone) have already been detailed previously, examples are provided below of the preparation of an aromatic-aliphatic dihalide, and subsequently, of the resin object of the present invention.

### Embodiments of an aromatic-aliphatic dihalide

The aromatic-aliphatic dihalide is obtained through the Friedel-Crafts reaction. Between 2 mmol and 0.06 moles, preferably 0.03 moles, of an aromatic dihalide reagent, 0.05 moles of aluminium chloride (AlCl₃) as an initiator and 150 ml of dichloromethane as a solvent are put in a round-bottom flask.

Then, while the solution is stirred, between 1 mmol and 0.03 moles, preferably 14mmol of a second reagent (such as 1,4-Diphenoxybenzene or Diphenyl ether) is added little by little, producing an aromatic-aliphatic dihalide in 24-72 hours.

Preferably, the reaction is brought to room temperature and in the last hour it is refluxed.

As an example of aromatic-aliphatic dihalides that can be obtained by means of this embodiment, we can take an aromatic-aliphatic dihalide of formula (III): 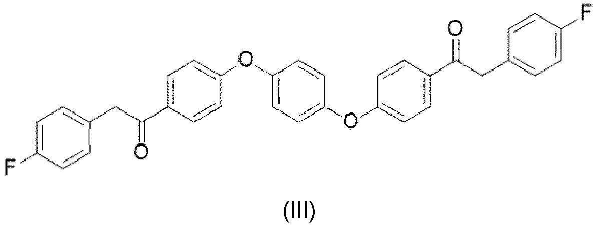 or an aromatic-aliphatic dihalide of formula (IV):

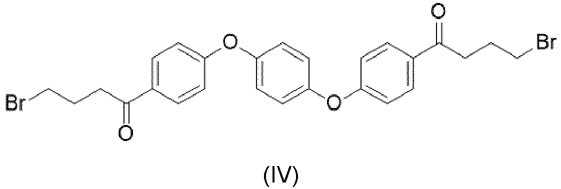

### Embodiment of the resin

Below, examples of producing the resin object of the invention are described, and from now on, the reference RC1 will be used for a resin that comprises at least one prepolymer reagent of a polyether ether ketone (PEEK) type composition with an aliphatic chain comprising a number of carbons between 2 and 4, and the reference RC2 for a resin that comprises at least one prepolymer reagent of a polyether ether ketone (PEEK) type composition with an aliphatic chain comprising a number of carbons between 3 and 8.

### First embodiment of the resin

Firstly, in the production of the RC1 and RC2 resin, an aromatic dihalide (or an aromatic-aliphatic dihalide) (0.8 mmol), potassium carbonate (K₂CO₃) (0.012 mol) and N,N-dimethylformamide (DMF) (16.46 ml) as a solvent are put in a spherical flask.

At room temperature, N₂ is allowed to pass through so as to obtain an inert atmosphere and the temperature is raised to 150°C. Once the solution has reached said temperature, an aromatic-aliphatic dialcohol (0.8 mmol) dissolved in DMF (1.32 ml) is added drop by drop, the reaction time being one week for the RC1 composition and two weeks for the RC2 composition.

The aqueous phase is then extracted with dichloromethane. Subsequently, the organic phases are washed with aqueous sodium bicarbonate solution (NaHCO₃) and dried with sodium sulphate (Na₂SO₄). Lastly, the resin is concentrated in the rotary evaporator.

### Second embodiment of the resin

In a 3-neck round-bottom flask, sodium carbonate (Na₂CO₃) or potassium carbonate (K₂CO₃), DMF and an aromatic dihalide (or an aromatic-aliphatic dihalide) and an aromatic-aliphatic dialcohol (between 0.1 and 10 mmol) a placed at room temperature and in an inert atmosphere. Subsequently, the temperature is raised between 80 and 220 °C, the reaction time being between 48 hours and 2 weeks.

Subsequently, the aqueous phase is extracted with dichloromethane or chloroform and cleaned with an aqueous solution of sodium carbonate (Na₂CO₃) or potassium carbonate (K₂CO₃) and water. Lastly, it is dried with sodium sulphate (Na₂SO₄) and is concentrated in the rotary evaporator.

### Embodiment of resin polymerisation

In the present embodiment of a method for the polymerisation of resin RC1, firstly, placed in the round-bottom flask is the RC1 resin with a first initiator (between 1 and 5% by weight), in this case cesium fluoride (CsF).

Polymerisation is done at the melting temperature (between 120 and 200°C) with constant stirring in a vacuum between 1 hour and 72 hours.

It is noteworthy that other possible first initiators could be Titanium butoxide (TiBut), Antimony oxide (Sb₂O₃) or phenoxides.

### Embodiment of manufacturing a composite material

Stored in a first tank is the RC1 or RC2 resin, and stored in a second tank is the corresponding first initiator (which can be selected from a list that comprises CsF, Titanium butoxide (TiBut), Antimony oxide (Sb₂O₃) or phenoxides).

They are subsequently mixed in an inert atmosphere in a third tank, wherein said third tank comprises an agitator, the RC1 or RC2 resin in the molten state and the second initiator at a temperature between 120°C and 200°C.

Secondly, a fibrous substrate located inside a mould (of the composite part to be manufactured) is impregnated with the aforementioned mixture at a temperature between 120°C and 200°C.

Lastly, the compound polymerises after a time between 1h and 72h, depending on the temperature at which the method is carried out.

## Claims

1. A resin for a composite material, **characterised in that** it comprises at least one prepolymer reagent of a polyether ether ketone (PEEK) type of composition that comprises at least one aliphatic chain.

2. The resin for a composite material, according to the preceding claim, wherein the prepolymer reagent has the formula (I): 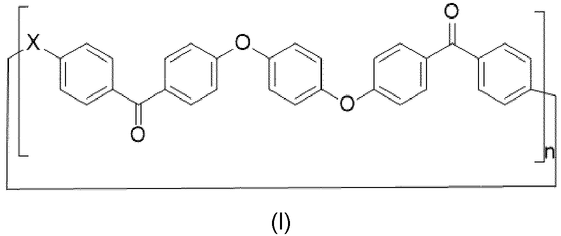 where X comprises at least one aliphatic chain.

3. The resin for a composite material, according to the first claim, wherein the prepolymer reagent has the formula (II): 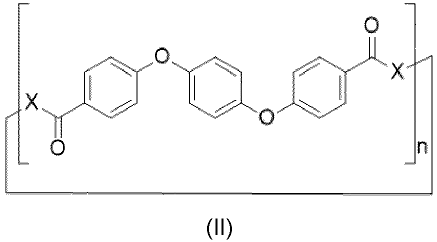 where X comprises at least one aliphatic chain.

4. The resin for a composite material, according to any one of the preceding claims, where the aliphatic chain comprises between 1 and 12 carbons.

5. A manufacturing method for a composite material, comprising the steps of:
1) mixing, in an inert atmosphere and molten state, a resin according to any one of claims 1 to 4, and a first initiator,
2) impregnating a fibrous substrate with said mixture in a molten state in a mould;
3) allowing the mixture to polymerise.

6. The manufacturing method, according to the preceding claim, wherein the method is carried out at a temperature between 120°C and 200°C.

7. The manufacturing method, according to any one of claims 5 to 6, wherein the first initiator is selected from a list comprising CsF, Titanium butoxide (TiBut), Antimony oxide (Sb₂O₃) or phenoxides.

8. The manufacturing method, according to any one of claims 5 to 7, wherein the duration of polymerisation has a value between 1 to 72 h.

9. A composite material, manufactured according to a manufacturing method in accordance with any one of claims 5 to 8.
